# EUROPÄISCHE PATENTSCHRIFT

(11) **EP 2 686 455 B1**
(45) Veröffentlichungstag und Bekanntmachung des Hinweises auf die Patenterteilung: **04.03.2015**
(21) Anmeldenummer: 12709054.6
(22) Anmeldetag: 08.03.2012
(51) Int. Cl.: C21B 5/06, C21B 7/00

(54) **VERFAHREN ZUR HEIZWERTREGELUNG FÜR ABGASE AUS ANLAGEN ZUR ROHEISENHERSTELLUNG ODER FÜR SYNTHESEGAS**
PROCESS FOR REGULATING THE JOULE VALUE OF OFFGASES FROM PLANTS FOR PIG IRON PRODUCTION OR OF SYNTHESIS GAS
PROCÉDÉ DE RÉGULATION DE LA PUISSANCE CALORIFIQUE POUR GAZ BRÛLÉS DÉGAGÉS D'INSTALLATIONS DE PRODUCTION DE FONTE OU POUR GAZ DE SYNTHÈSE

(30) Priorität: 17.03.2011 AT 3692011
(43) Veröffentlichungstag der Anmeldung: 22.01.2014
(73) Patentinhaber: Siemens VAI Metals Technologies GmbH, 4031 Linz (AT)
(72) Erfinder: MILLNER, Robert, A-3382 Loosdorf (AT); PLAUL, Jan-Friedemann, A-4020 Linz (AT)
(74) Vertreter: Maier, Daniel Oliver
(86) Internationale Anmeldenummer: PCT/EP2012/053979
(87) Internationale Veröffentlichungsnummer: WO 2012/123322

(56) Entgegenhaltungen:
- AT-A1- 507 823
- AT-B1- 507 525
- US-A1- 2006 234 171
- US-A1- 2010 146 982

## Beschreibung

### GEBIET DER ERFINDUNG

Die Erfindung betrifft ein Verfahren zur Heizwertregelung für Abgase aus Anlagen zur Roheisenherstellung mit integrierten CO₂-Abscheideanlagen, wobei zumindest ein Teil des Abgases als Exportgas aus der Anlage zur Roheisenherstellung abgeführt, gegebenenfalls in einem Exportgasbehälter gesammelt, und nachfolgend in einer Gasturbine thermisch verwertet wird, wobei das Abgas aus der Gasturbine einem Abwärmedampferzeuger zur Erzeugung von Dampf zugeführt wird. Die Erfindung kann ebenso zur Heizwertregelung für Synthesegas aus Anlagen zur Synthesegasherstellung mit integrierten CO₂-Abscheideanlagen verwendet werden, wobei zumindest ein Teil des Synthesegases als Exportgas aus der Anlage zur Synthesegasherstellung abgeführt, jedoch nicht in einem Exportgasbehälter gesammelt, sondern nachfolgend in einer Gasturbine thermisch verwertet wird, wobei das Abgas aus der Gasturbine einem Abwärmedampferzeuger zur Erzeugung von Dampf zugeführt wird. Gegenstand der Erfindung ist auch eine Anlage zur Durchführung des erfindungsgemäßen Verfahrens.

### STAND DER TECHNIK

Zur Herstellung von Roheisen, womit auch die Herstellung roheisenähnlicher Produkte umfasst sein soll, gibt es im Wesentlichen zwei bekannte gängige Verfahren: das Hochofenverfahren und die Schmelzreduktion.

Beim Hochofenverfahren wird zuerst Roheisen aus Eisenerz mit Hilfe von Koks hergestellt. Außerdem kann zusätzlich Schrott eingesetzt werden. Danach wird durch weitere Verfahren aus Roheisen Stahl hergestellt. Das Eisenerz wird als Stückerz, Pellets oder Sinter zusammen mit den Reduktionsmitteln (meist Koks, oder auch Kohle, z.B. in Form einer Feinkohleeindüsanlage) und weiteren Bestandteilen (Kalkstein, Schlackenbildner, usw.) zum sogenannten Möller vermischt und anschließend in den Hochofen chargiert. Der Hochofen ist ein metallurgischer Reaktor, in dem im Gegenstrom die Möllersäule mit heißer Luft, dem sogenannten Heißwind, reagiert. Durch Verbrennen des Kohlenstoffs aus dem Koks entstehen die für die Reaktion nötige Wärme und Kohlenmonoxid bzw. Wasserstoff, das einen wesentlichen Teil des Reduktionsgases darstellt und das die Möllersäule durchströmt und das Eisenerz reduziert. Als Ergebnis entstehen Roheisen und Schlacke, die periodisch abgestochen werden.

Im sogenannten Sauerstoffhochofen, welcher auch als Hochofen mit Top- oder Gichtgasrückführung bezeichnet wird, wird bei der Vergasung von Koks bzw. Kohle sauerstoffhältiges Gas mit mehr als 90 Volums% Sauerstoffanteil (O₂) in den Hochofen eingeblasen.

Für das aus dem Hochofen austretende Gas, das sogenannte Top- oder Gichtgas, muss eine Gasreinigung vorgesehen werden (z.B. Staubabscheider und/oder Zyklone in Kombination mit Nasswäschern, Schlauchfiltereinheiten oder Heißgasfiltern). Weiters wird beim Sauerstoffhochofen meist ein Kompressor, vorzugsweise mit Nachkühler, für das in den Hochofen zurückgeführte Topgas vorgesehen sowie eine Vorrichtung zur CO₂-Entfernung, nach dem Stand der Technik meist mittels Druckwechsel-Adsorption.

Weitere Optionen für die Ausgestaltung eines Hochofenverfahrens sind ein Erhitzer für das Reduktionsgas und/oder eine Brennkammer für die teilweise Verbrennung mit Sauerstoff.

Die Nachteile des Hochofens sind die Anforderungen an die Einsatzmaterialien und der hohe Ausstoß an Kohlendioxid. Der eingesetzte Eisenträger und der Koks müssen stückig und hart sein, sodass genügend Hohlräume in der Möllersäule bestehen bleiben, die das Durchströmen durch den eingeblasenen Wind gewährleisten. Der CO₂-Ausstoß stellt eine starke Umweltbelastung dar. Deshalb gibt es Bestrebungen, die Hochofenroute abzulösen. Zu nennen sind hier die Eisenschwammherstellung auf Basis von Erdgas (MIDREX, HYL, FINMET®) sowie die Schmelzreduktionsverfahren (COREX®- und FINEX®-Verfahren).

Bei der Schmelzreduktion kommt ein Einschmelzvergaser zum Einsatz, in dem heißes flüssiges Metall hergestellt wird, sowie zumindest ein Reduktionsreaktor, in dem der Träger des Eisenerzes (Stückerz, Feinerz, Pellets, Sinter) mit Reduktionsgas reduziert wird, wobei das Reduktionsgas im Einschmelzvergaser durch Vergasung von Kohle (und gegebenenfalls eines kleinen Anteils von Koks) mit Sauerstoff (90% oder mehr) erzeugt wird.

Auch beim Schmelzreduktionsverfahren sind in der Regel
- Gasreinigungsanlagen (einerseits für das Topgas aus dem Reduktionsreaktor, andererseits für das Reduktionsgas aus dem Einschmelzvergaser),
- ein Kompressor, vorzugsweise mit Nachkühler, für das in den Reduktionsreaktor zurückgeführte Reduktionsgas,
- eine Vorrichtung zur CO₂-Entfernung, nach dem Stand der Technik meist mittels Druckwechsel-Adsorption
- sowie optional ein Erhitzer für das Reduktionsgas und/oder eine Brennkammer für die teilweise Verbrennung mit Sauerstoff vorgesehen.

Der COREX®-Prozess ist ein zweistufiges Schmelzreduktionsverfahren (engl.: smelting reduction). Die Schmelzreduktion kombiniert den Prozess der Direktreduktion (Vorreduktion von Eisen zu Eisenschwamm) mit einem Schmelzprozess (Hauptreduktion).

Das ebenfalls bekannte FINEX®-Verfahren entspricht im Wesentlichen dem COREX®-Verfahren, allerdings wird Eisenerz als Feinerz eingebracht.

Die Erfindung kann nicht nur bei der Roheisenerzeugung, sondern auch bei Synthesegasanlagen angewendet werden. Synthesegase sind alle wasserstoffhaltigen und meist auch COhaltigen Gasgemische, die in einer Synthesereaktion zum Einsatz kommen sollen. Synthesegase können aus festen, flüssigen oder gasförmigen Stoffen hergestellt werden. Insbesondere fallen darunter die Kohlevergasung (Kohle wird mit Wasserdampf und/oder Sauerstoff zu Wasserstoff und CO umgesetzt) und die Herstellung von Synthesegas aus Erdgas (Umsetzung von Methan mit Wasserdampf und/oder Sauerstoff zu Wasserstoff und CO). Im Falle der Kohlevergasung entfällt sinnvoller Weise der Exportgasspeicher, wie er nach Anlagen zur Roheisenherstellung vorgesehen ist, weil der hohe Synthesegasdruck aus dem Vergaser (meist > 20 barg, bevorzugt circa 40 barg) auch gleich in der Gasturbine genutzt werden kann, wo in der Regel ein Gasdruck von ca. 20-25 barg benötigt wird. Das CO₂-reiche Restgas aus der CO₂-Entfernungsanlage muss allerdings mittels Kompressor auf den Druck des Synthesegasstroms verdichtet werden.

Wenn der CO₂-Ausstoß in die Atmosphäre bei der Herstellung von Roheisen oder bei der Synthesegaserzeugung reduziert werden soll, muss dieses aus den Abgasen aus der Roheisen- bzw. Synthesegaserzeugung abgeschieden und in gebundener Form gespeichert werden (engl.: CO₂ Capture and sequestration (CCS)).

Zur Abscheidung von CO₂ wird bisher vornehmlich die Druckwechsel-Adsorption (engl.: PSA - Pressure Swing Adsorption), insbesondere auch die Vakuum-Druckwechsel-Adsorption (engl.: VPSA - Vacuum Pressure Swing Adsorption) verwendet. Die Druckwechsel-Adsorption ist ein physikalisches Verfahren zur selektiven Zerlegung von Gasgemischen unter Druck. Spezielle poröse Materialien (z. B. Zeolithe, Aktivkohle, aktiviertes Siliziumoxid (SiO₂), aktiviertes Aluminiumoxid (Al₂O₃) oder der kombinierte Einsatz dieser Materialien) werden als Molekularsieb eingesetzt, um Moleküle entsprechend ihrer Adsorptionskräfte und/oder ihrem kinetischen Durchmesser zu adsorbieren. Bei der PSA wird ausgenutzt, dass Gase unterschiedlich stark an Oberflächen adsorbieren. Das Gasgemisch wird in eine Kolonne unter einem genau definierten Druck eingeleitet. Nun adsorbieren die unerwünschten Komponenten (hier CO₂ und H₂O) und der Wertstoff (hier CO, H₂, CH₄) strömt weitgehend ungehindert durch die Kolonne. Sobald das Adsorbens vollständig beladen ist, wird der Druck abgebaut und die Kolonne rückgespült. Zum Betreiben einer (V)PSA-Anlage wird elektrischer Strom für die vorherige Verdichtung des CO₂ reichen Rückführgases benötigt.

Der Produktgasstrom nach der Druckwechsel-Adsorption, der die Wertstoffe enthält, enthält bei Abgasen aus der Roheisenerzeugung noch etwa 2-6 vol% CO₂. Der Restgasstrom (engl. tail gas) aus der (V)PSA Anlage enthält aber immer noch verhältnismäßig hohe reduzierende Gasbestandteile (etwa CO, H₂), die für die Roheisenerzeugung verloren gehen.

Der Restgasstrom nach der Druckwechsel-Adsorption, der die unerwünschten Komponenten enthält, setzt sich bei Abgasen aus der Roheisenerzeugung in typischer Weise wie folgt zusammen:

| Verbindung | vol% bei VPSA | vol% bei PSA |
|---|---|---|
| H₂ | 2,2 | 5,5 |
| N₂ | 1,5 | 2,4 |
| CO | 10, 9 | 16,8 |
| CO₂ | 82,1 | 72,2 |
| CH₄ | 0,7 | 0,9 |
| H₂O | 2, 6 | 2,2 |

Das Restgas kann nicht einfach thermisch verwertet werden, weil es - aufgrund des niedrigen und/oder schwankenden Heizwerts von etwa ±50% - dazu mit anderen Brennstoffen angereichert werden müsste. Man kann es etwa zur Gänze dem sogenannten Exportgas zumischen, das ist jener Teil des Prozessgases, das aus dem Prozess der Roheisen- bzw. Synthesegaserzeugung abgezogen und für andere Zwecke verwendet wird, etwa als Brennstoff in einem kombinierten Gas- und Dampfkraftwerk, das auch als Kombikraftwerk (engl.: combined cycle power plant, kurz CCPP) bezeichnet wird. Bestandteile des Exportgases bei der Roheisenerzeugung können sein:
- Topgas und/oder Generatorgas aus einem Hochofen, einem Reduktionsreaktor (Wirbelschichtreaktor) oder einem Reduktionsschacht (Festbettreaktor)
- sogenanntes Offgas aus einem Reduktionsreaktor (Wirbelschichtreaktor)
- sogenanntes Überschussgas (engl. excess gas) aus einem Einschmelzvergaser

Das Zumischen von Restgas aus der CO₂-Abscheidung zum Exportgas ist aber nur dann sinnvoll, wenn der Heizwert des Exportgases so hoch ist, dass er nach Zumischen des Restgases nicht unter einen Wert sinkt, der für die nachfolgende Verwendung des Exportgases zu gering ist.

Ein verminderter Heizwert des Exportgases verringert in der Folge den Wirkungsgrad eines mit dem Exportgas versorgten Kraftwerks, etwa bei einem Kombikraftwerk aufgrund der hohen Brenngaskompression und des niedrigeren Wirkungsgrades der Gasturbine. Bei einem Dampfkraftwerk oder Heizkessel würde die Flammentemperatur während der Verbrennung reduziert werden.

Ist eine Zumischung des Restgases aus der CO₂-Abscheidung zum Exportgas nicht sinnvoll, wurde dieses bisher zur Gänze an einer Heißfackel verbrannt. Dies hat nicht nur den Nachteil, dass die beim Abfackeln entstehende Wärme verloren geht, sondern auch, dass durch unvollständige Verbrennung des Restgases an der Heißfackel beträchtliche Gasemissionen in Form von Kohlenmonoxid CO, Schwefelwasserstoff H₂S, etc., entstehen könnten.

Ein anderes Problem bei der Verwendung von Exportgas aus Anlagen zur Roheisen- oder Synthesegasherstellung ist, dass der Heizwert des Exportgases schwankt. Daher wird das Exportgas vor Zuleitung zu einem Verbraucher, wie einem Kraftwerk, in einem Exportgasbehälter mit großem Volumen, z.B. in der Größenordnung von 100.000 m³, gespeichert, um die Gaszusammensetzung zu vergleichmäßigen. Um einen konstanten Heizwert mit einer Schwankungsbreite von +/- 1-2% zu erzielen, wurde bisher bei Abweichungen des Heizwerts vom gewünschten konstanten Wert nach oben Abfallstickstoff aus einer Luftzerlegungsanlage zugemischt. Bei Abweichungen des Heizwerts nach unten wurde Koksofengas (etwa aus der Pyrolyse von Steinkohle zu Koks für den Hochofen) zugemischt.

Ein entsprechendes Verfahren zum Heizwertausgleich ist in der AT 507 525 B1 gezeigt. Gemäß dieser Veröffentlichung wird das Exportgas einer Puffereinrichtung zugeführt, wo die Regelung des Heizwertes erfolgt, gemäß welcher der Heizwert durch Zusatz von Hüttengas oder Erdgas angehoben oder durch Zusatz von Stickstoff bzw. Wasserdampf gesenkt wird.

Das anfallende Restgas (Tailgas) aus einer CO₂-Abscheideeinrichtung wird in der AT 507 525 B1 in einer eigenen Speichereinrichtung gesammelt, wobei es zu einem Heizwertausgleich im gespeicherten Restgas kommt. Das vorab gespeicherte Restgas wird einem Abwärmedampferzeuger zugeführt, wo durch Verbrennung des Restgases Dampf erzeugt wird, der eine Dampfturbine und einen Generator antreibt. Dem Restgas kann in der Speichereinrichtung ein Teil des Exportgases zugeführt werden, das eine Entspannungsturbine passiert hat.

Zwar wird bei der Ausführung gemäß der AT 507 525 B1 das Verbrennen des Restgases in einer Heizfackel vermieden, nachteilig ist aber dennoch, dass für die Regelung des Heizwerts des Exportgases hochwertiges Brenngas, wie in der Anlage verfügbares Hüttengas oder eigens zu beschaffendes, in der Anlage nicht vorhandenes Erdgas, verwendet wird.

Es ist daher eine Aufgabe der Erfindung, ein Verfahren zur Heizwertregelung für das Exportgäs zur Verfügung zu stellen, das mit einem geringeren Zusatz von hochwertigen Brenngasen auskommt.

### DARSTELLUNG DER ERFINDUNG

Die Aufgabe wird durch ein Verfahren nach Anspruch 1 gelöst, indem dem Exportgas vor der Gasturbine, insbesondere gegebenenfalls vor dem der Gasturbine vorgeschalteten Exportgasbehälter, in Abhängigkeit vom Heizwert des Exportgases nach der Restgaszugabe, insbesondere nach dem Exportgasbehälter, zumindest ein Teil des Restgases aus der CO₂-Abscheideanlage zugemischt wird, wobei der Restgasanteil erhöht wird, wenn der Heizwert des Exportgases über einen vordefinierten maximalen Heizwert steigt, und der Restgasanteil verringert wird, wenn der Heizwert des Exportgases unter einen vordefinierten minimalen Heizwert sinkt.

In der Regel wird ein gewünschter Heizwert des Exportgases, der von der verwendeten Gasturbine abhängt, festgelegt, sowie eine Schwankungsbreite, um die der tatsächliche Heizwert vom gewünschten Heizwert im Betrieb abweichen darf. Das obere Ende der Schwankungsbreite stellt den vordefinierten maximalen Heizwert dar, das untere Ende den vordefinierten minimalen Heizwert. Wenn keine Schwankungsbreite festgelegt wird, dann fällt der minimale mit dem maximalen Heizwert zusammen.

Für die meiste Zeit des Betriebes wird die Heizwertregelung aufgrund der zugegebenen Menge an Restgas möglich sein. Es kann aber zusätzlich vorgesehen werden, dass mit Restgas gemischte Exportgas vor der Gasturbine einen Pufferbehälter durchläuft. In diesem Pufferbehälter kann weiteres, vor dem Pufferbehälter zugeführtes Gas mit der Mischung aus Exportgas und Restgas vermischt werden.

So kann etwa vorgesehen werden, dass bei Unterschreiten des vordefinierten minimalen Heizwerts vor der Gasturbine zusätzlich, zum Beispiel vor und/oder nach dem Pufferbehälter, Brenngas zugegeben wird. Als Brenngas wird Gas bezeichnet, dass zum überwiegenden Teil brennbare Gase enthält. Typische Brenngase sind Erdgas, Flüssiggas (LNG, engl. liquefied natural gas), Koksofengas.

Steigt der Heizwert an, so kann vorgesehen werden, dass - zusätzlich zum Restgas - bei Überschreiten des vordefinierten maximalen Heizwerts vor der Gasturbine, zum Beispiel vor und/oder nach dem Pufferbehälter, nicht brennbares Gas zugegeben wird. Als nicht brennbares Gas wird Gas bezeichnet, dass zum überwiegenden Teil nicht brennbare Gase enthält. Typische nicht brennbare Gase sind Stickstoff oder Wasserdampf.

Jener Teil des Restgases, der nicht dem Exportgas zugemischt wird, kann im Falle der Roheisenherstellung dem Hüttenwerksgasnetz zugeführt werden. Das Hüttenwerksgasnetz umfasst alle Leitungen für Gase, die in einem Hüttenwerk anfallen oder für die Verhüttung hergestellt werden, somit etwa Gas für die Trocknung von Rohmaterial (Eisenerz, Kohle) oder Gas, das aus dem Hüttenwerk einem konventionellen Kraftwerk mit Heizkessel als Brennstoff zugeführt wird. Selbstverständlich ist auch das Gasnetz für das Gichtgas, das Topgas oder Generatorgas, das Offgas und das Überschussgas Bestandteil des Hüttenwerksgasnetzes. Idealerweise wird das Restgas zum Gichtgas zugegeben, da der Heizwert im selben Bereich liegt (der gemittelte Heizwert liegt im Bereich von 2.000 bis 4.000 kJ/Nm³). Der Teil des Restgases, der nicht dem Exportgas zugemischt wird, kann auch einer Heißfackel zugeführt werden.

Bei einem Störfall oder mangelnder Abnahme des Restgases durch das Hüttenwerksgasnetz kann das Restgas über ein Regelventil auch zur Heißfackel geleitet werden.

Das Exportgas kann bei der vorliegenden Erfindung zumindest eines der folgenden Abgase enthalten:
- Topgas aus einem Hochofen, insbesondere aus einem Sauerstoffhochofen mit Topgasrückführung,
- Abgas aus einem Einschmelzvergaser einer Schmelzreduktionsanlage, welches auch als Überschussgas bezeichnet wird
- Abgas aus zumindest einem Reduktionsreaktor einer Schmelzreduktionsanlage, welches auch als Offgas bezeichnet wird, oder aus einem Reduktionsschacht
- Abgas aus zumindest einem Festbettreaktor zur Vorwärmung und/oder Reduktion von Eisenoxiden und/oder Eisenbriketts einer Schmelzreduktionsanlage, welches auch als Topgas bezeichnet wird
- Synthesegas aus einer Anlage zur Synthesegasherstellung.

Die erfindungsgemäße Anlage zur Durchführung des Verfahrens umfasst zumindest
- eine Anlage zur Roheisenherstellung mit integrierter CO₂-Abscheideanlage oder eine Anlage zur Synthesegasherstellung mit integrierter CO₂-Abscheideanlage,
- eine Exportgasleitung, mit welcher ein Teil des Abgases bzw. Synthesegases als Exportgas aus der Anlage zur Roheisenherstellung bzw. zur Synthesegasherstellung abgeführt werden kann,
- gegebenenfalls einem Exportgasbehälter, in welchem das Exportgas gesammelt werden kann, sowie
- eine Gasturbine, in welcher das Exportgas thermisch verwertet werden kann,
- einem Abwärmedampferzeuger, in welchem das Abgas aus der Gasturbine zur Erzeugung von Dampf verwendet werden kann.

Sie ist dadurch gekennzeichnet, dass die CO₂-Abscheideanlage so mit der Exportgasleitung verbunden ist, dass dem Exportgas vor der Gasturbine, insbesondere gegebenenfalls vor dem der Gasturbine vorgeschalteten Exportgasbehälter, zumindest ein Teil des Restgases aus der CO₂-Abscheideanlage zugemischt werden kann, und dass nach der Restgaszugabe, insbesondere nach dem Exportgasbehälter, ein Messgerät zur Heizwertmessung des Exportgases vorgesehen ist.

Entsprechend den oben beschriebenen Verfahrensvarianten kann vorgesehen sein, dass -gegebenenfalls nach dem Exportgasbehälter und - vor der Gasturbine ein Pufferbehälter vorgesehen ist.

Vor und/oder nach dem Pufferbehälter kann zumindest eine Zuleitung für Brenngas vorgesehen sein, ebenso wie zumindest eine Zuleitung für nicht brennbares Gas.

Für jenen Teil des Restgases, der nicht dem Exportgas zugemischt wird, kann im Falle der Roheisenherstellung eine Leitung vorgesehen werden, welche in das Hüttenwerksgasnetz, bevorzugter Weise in das Gichtgasnetz, oder in eine Heißfackel mündet.

In die Exportgasleitung mündet in der Regel zumindest eine Leitung, mit welcher
- Topgas aus einem Hochofen, insbesondere aus einem Sauerstoffhochofen mit Topgasrückführung,
- Abgas aus einem Einschmelzvergaser einer Schmelzreduktionsanlage,
- Abgas aus zumindest einem Reduktionsreaktor oder Reduktionsschacht einer Schmelzreduktionsanlage,
- Abgas aus zumindest einem Festbettreaktor zur Vorwärmung und/oder Reduktion von Eisenoxiden und/oder Eisenbriketts einer Schmelzreduktionsanlage,
- Synthesegas aus einer Anlage zur Synthesegasherstellung in die Exportgasleitung geleitet werden kann.

Mit dem erfindungsgemäßen Verfahren bzw. der erfindungsgemäßen Vorrichtung kann höherwertiges Brenngas, wie Erdgas, Flüssiggas oder Koksofengas, eingespart werden, gleichzeitig kann der Heizwert des Exportgases an die Gasturbine angepasst werden und so ein hoher Wirkungsgrade der Gasturbine erreicht werden. Durch das Zumischen des Restgases aus der CO₂-Abscheideanlage zum Exportgas wird weniger bis gar kein Restgas mehr abgefackelt. Die Energie des Restgases kann daher großteils in elektrische Energie umgewandelt werden, die Gasemissionen der Heizfackel durch unverbranntes Restgas sinken oder werden im besten Fall ganz vermieden.

### KURZE BESCHREIBUNG DER FIGUREN

Die Erfindung wird im Folgenden anhand der beispielhaften und schematischen Figuren näher erläutert.
Fig. 1 zeigt eine erfindungsgemäße Anlage mit einem Hochofen
Fig. 2 zeigt eine erfindungsgemäße Anlage mit einer FINEX®-Anlage
Fig. 3 zeigt eine erfindungsgemäße Anlage mit einer COREX®-Anlage

### WEGE ZUR AUSFÜHRUNG DER ERFINDUNG

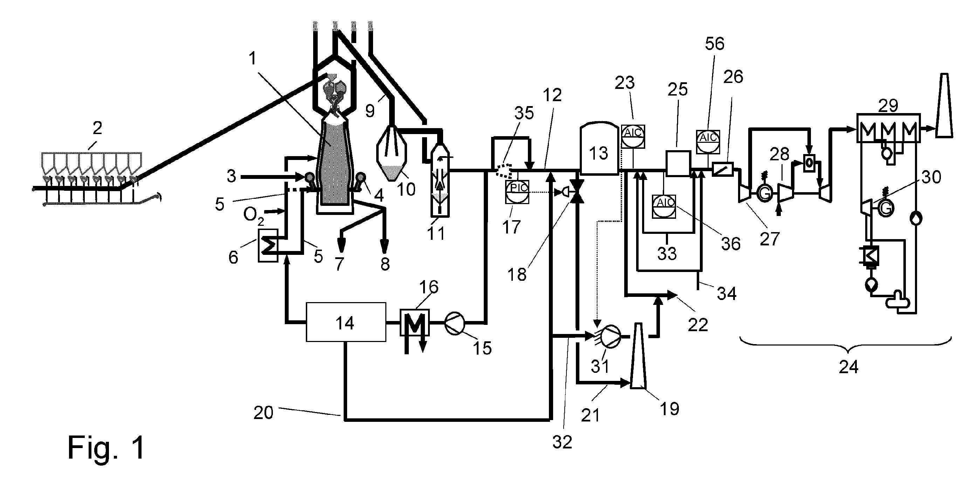

In Fig. 1 ist ein Sauerstoffhochofen mit Topgasrückführung 1 dargestellt, in welchen Eisenerz aus einer Sinteranlage 2 sowie Koks (nicht dargestellt) zugeführt wird. Sauerstoffhältiges Gas 3 mit einem Sauerstoffgehalt > 90 Volums% wird in die Ringleitung 4 eingebracht, ebenso wird im Reduktionsgasofen 6 erwärmtes Reduktionsgas 5 gemeinsam mit kaltem oder vorgewärmtem Sauerstoff O₂ in den Hochofen 1 eingebracht. Schlacke 7 und Roheisen 8 werden unten abgezogen. An der Oberseite des Hochofens 1 wird das Top- oder Gichtgas 9 entnommen und in einem Staubabscheider oder Zyklon 10 vorgereinigt und einem Nasswäscher 11 (oder einem Schlauchfilter bzw. Heißgasfiltersystem) nochmals gereinigt. Das so gereinigte Top- oder Gichtgas kann einerseits direkt als Exportgas 12 aus dem Hochofensystem entnommen und einem Exportgasbehälter 13 zugeführt werden, andererseits kann es einer CO₂-Abscheideanlage zugeführt werden, die hier als Anlage zur Druckwechsel-Absorption von CO₂, kurz als PSA-Anlage 14 bezeichnet, ausgeführt ist, wobei das gereinigte Top- oder Gichtgas zuvor in einem Kompressor 15 auf etwa 2-6 bar_{g} verdichtet und in einem Nachkühler 16 auf etwa 30-60°C abgekühlt wird.

Die PSA-Anlage 14 ist aus dem Stand der Technik bekannt und muss daher hier nicht weiter erläutert werden.

Das Restgas 20 wird hier erfindungsgemäß zumindest teilweise dem Exportgas 12 vor dem Exportgasbehälter 13 zugeleitet und mit diesem vermischt. Es könnte auch im Falle einer Absorptionsanlage zur CO₂-Entfernung - ganz oder zum Teil - entweder nach einer H₂S-Reinigung wieder in die Atmosphäre entlassen werden und/oder einem weiteren Verdichter zur Verflüssigung von CO₂ zugeführt werden, um es dann fortzuleiten und etwa unterirdisch zu lagern oder um es als Ersatz für Stickstoff bei der Eisenherstellung zu verwenden. Für den Fall einer (V)PSA zur CO₂-Entfernung und einer Sequestrierung ist normalerweise eine weitere Aufbereitungsanlage zum Aufkonzentrieren des CO₂-Stromes erforderlich.

Der Druckenergieinhalt des Exportgases 12 kann auch in einer Expansionsturbine 35 (engl. Top gas pressure recovery turbine) ausgenützt werden, die in diesem Beispiel vor dem Exportgasbehälter 13 und der Zuleitung für Restgas 20 angeordnet ist. Eine entsprechende Umleitung für das Exportgas 12 um die Expansionsturbine 35 ist vorgesehen, falls das Exportgas 12 - etwa im Falle eines Wartungsstillstandes der Expansionsturbine - nicht durch die Expansionsturbine 35 geführt werden soll. Der Druck des Exportgases 12 nach der Expansionsturbine 35 und vor der Zuleitung für Restgas 20 wird mit einem Druckmesser 17 gemessen und in Abhängigkeit vom gemessenen Druck oder des Niveaus im Exportgasbehälter ein Ventil 18 in der Leitung 21 für Exportgas zur Heißfackel 19 betätigt: übersteigt der Druck des Exportgases 12 oder das Niveau im Exportgasbehälter einen vordefinierten Wert, dann wird zumindest ein Teil davon zur Heißfackel 19 geleitet und dort verbrannt, der Rest geht weiter in den Exportgasbehälter 13.

Das Exportgas aus dem Exportgasbehälter 13 wird einem Kombikraftwerk 24 als Brennstoff zugeleitet, und zwar optional über einen Pufferbehälter 25 und optional einen Filter 26. Das Exportgas wird einem Brenngaskompressor 27 und dann der Gasturbine 28 zugeführt. Die Abwärme aus der Gasturbine wird im Abhitzekessel 29 für einen Dampfkreislauf mit einer Dampfturbine 30 genützt.

Für das Kombikraftwerk 24 nicht benötigtes Exportgas 22 kann nach dem Exportgasbehälter 13 abgezogen und dem Hüttenwerksgasnetz zugeführt werden, wo es zu anderen Zwecken verwendet werden kann, etwa zur Rohstofftrocknung (Kohle-, Feinkohle- oder Erztrocknung) oder es kann als Brennstoff für konventionelle thermische Nutzung (z.B. Dampfkraftwerke, Dampfkessel, etc.) verwendet werden. Das Ableiten von nicht benötigtem Exportgas 22 kann über ein hier nicht dargestelltes Regelventil in der Leitung für das nicht benötigte Exportgas 22 erfolgen.

Nach dem Exportgasbehälter 13 und nach der Ableitung von nicht benötigtem Exportgas 22 ist ein erstes Messgerät 23 zur Heizwertmessung vorgesehen. Abhängig von dessen Messwert wird ein Gebläse 31 geregelt, das in einer Leitung 32 für Restgas angeordnet ist. Diese Leitung 32 zweigt von der Leitung für Restgas 20 vor deren Mündung in die Leitung für Exportgas 12 ab und führt zur Leitung für nicht benötigtes Exportgas 22. Wenn der Heizwert des Exportgases über einen vordefinierten maximalen Heizwert steigt, dann wird die Leistung des Gebläses 31 verringert, sodass weniger Restgas in die Leitung 32 gesaugt und damit weniger Restgas zum nicht benötigten Exportgas 22 gelangt. Damit gelangt mehr Restgas in den Exportgasbehälter 13 und der Heizwert des Exportgases sinkt.

Statt des Gebläses 31 kann auch einfach ein Regelventil verwendet werden, das aufgrund des Messwertes des ersten Messgeräts 23 zur Heizwertmessung geregelt wird und das die Zufuhr von Restgas 20 zum Exportgas 12 und damit in den Exportgasbehälter 13 erhöht.

Wenn jedoch der Heizwert des Exportgases unter einen vordefinierten minimalen Heizwert sinkt, dann wird die Leistung des Gebläses 31 erhöht (oder ein entsprechendes Regelventil ganz oder teilweise geöffnet), sodass mehr Restgas in die Leitung 32 gesaugt bzw. geleitet wird und damit mehr Restgas zum nicht benötigten Exportgas 22 gelangt. Damit gelangt weniger Restgas in den Exportgasbehälter 13 und der Heizwert des Exportgases steigt.

Für Notfälle kann auch ein hier nicht dargestelltes Regelventil geöffnet werden, welches das Restgas in die Heißfackel 19 zur Verbrennung einleitet.

Der Druck im Fuß der Heißfackel 19 ist kleiner als ungefähr 5 kPa_{g}. Dieser Druck wiederum ist kleiner als der Druck des Exportgases 12, der in der Regel zwischen 8 und 12 kPa_{g} liegt, wobei sich der Druck des Exportgases 12 aufgrund von Rohrleitungsdruckverlusten im Ausmaß von etwa 1-3 kPa_{g} auf einen Druck von 7-9 kPa_{g} im Exportgasbehälter 13 absenkt.

Da das Leitungssystem, umfassend jenes für das Restgas 20 sowie die Leitung 32, während des gesamten Betriebes mit dem Leitungssystem für das Exportgas 12 verbunden bleibt, ändert sich auch der Desorptionsdruck für die PSA-Anlage 14 nicht. Es kommt somit durch die erfindungsgemäße Lösung zu keiner Verschlechterung beim Betrieb der PSA-Anlage 14.

Da die Regelung des Heizwertes mittels Gebläse 31 bzw. Regelventil für das Restgas nicht immer ausreichend sein muss, ist nach dem Exportgasbehälter 13 und nach dem ersten Messgerät 23 zur Heizwertmessung gegebenenfalls zusätzlich noch ein Pufferbehälter 25 angeordnet, in welchem das Exportgas 12, das gegebenenfalls bereits mit Restgas 20 vermischt ist, mit weiteren Gasen vermischt werden kann. Hierzu sind zwischen dem ersten Messgerät 23 zur Heizwertmessung und dem Pufferbehälter 25 eine Zuleitung 33 für Brenngas (z.B. Erdgas, Flüssiggas, Koksofengas) sowie eine Zuleitung 34 für nicht brennbares Gas 34 (z.B. Stickstoff, wie Abfallstickstoff aus einer Luftzerlegungsanlage, oder Wasserdampf) angeordnet. Mit diesen Zuleitungen kann nun Brenngas zugegeben werden, falls selbst ohne Zugabe von Restgas der Heizwert nicht über den vordefinierten minimalen Heizwert angehoben werden kann. Analog kann nicht brennbares Gas zugegeben werden, wenn selbst bei Zugabe des gesamten Restgases der Heizwert nicht unter den vordefinierten maximalen Heizwert abgesenkt werden kann.

Nach diesen beiden Zuleitungen, jedoch vor dem Pufferbehälter 25, ist ein zweites Messgerät 36 zur Heizwertmessung vorgesehen. Dieses kontrolliert, ob durch die davor liegenden Zuleitungen 33, 34 der Heizwert zwischen vordefiniertem minimalen und maximalen Heizwert eingestellt werden konnte. Falls nicht, so kann mittels nach dem Pufferbehälter 25 angeordneter Zuleitungen 33, 34 erneut Brenngas oder nicht brennbares Gas zugegeben werden. Der so erzielte Heizwert wird mit einem dritten Messgerät 56 zur Heizwertmessung ermittelt. Dieses Messgerät 56 ist nach den Zuleitungen 33, 34 vorgesehen, die nach dem Pufferbehälter 25 angeordnet sind, und vor dem Gaskompressor 27, hier auch vor dem Filter 26.

Der typische Heizwert des Restgases aus einer PSA-Anlage 14 liegt bei 700-900 kcal/Nm³, der Heizwert des Offgases aus einer FINEX®-Anlage, das als Exportgas 12 abgezogen wird, liegt bei 1300-1800 kcal/Nm³. Der für die Gasturbine 28 benötigte Heizwert liegt im Bereich des Heizwerts des Exportgases, die typische zulässige Schwankungsbreite des Heizwerts liegt für 1300 kcal/Nm³ bei +/- 20 kcal/Nm³. In diesem Fall würde der vordefinierte minimale Heizwert 1280 kcal/Nm³ und der vordefinierte maximalen Heizwert 1320 kcal/Nm³ betragen. Der für die Gasturbine 28 benötigte Heizwert hängt vom Typ der Gasturbine ab.

Das mit Restgas gemischte Exportgas wird vor der Gasturbine 27 und gegebenenfalls nach dem Pufferbehälter 25 in einem Abscheider 26 für Feststoffe vorsorglich gereinigt.

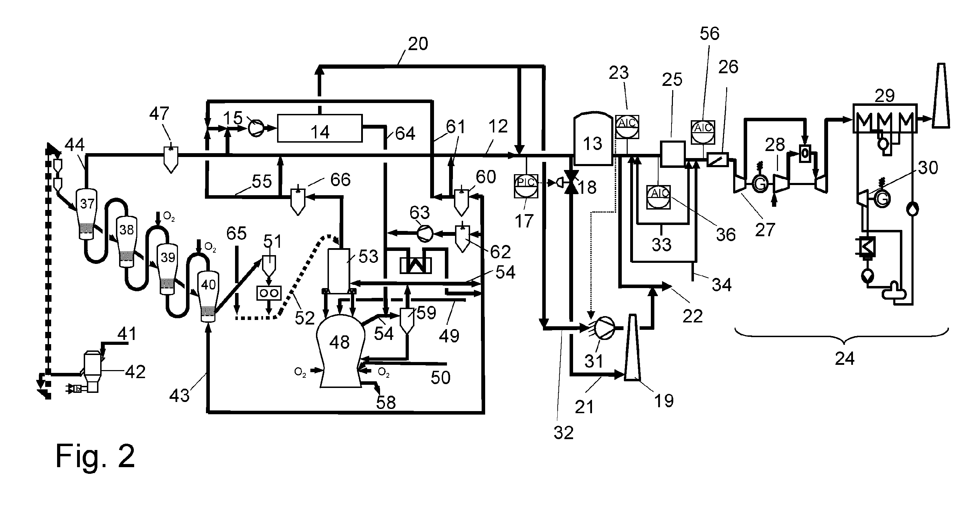

Fig. 2 zeigt die erfindungsgemäße Verbindung zwischen einer FINEX®-Anlage einerseits und einem Kombikraftwerk 24 samt vorgeschaltetem Exportgasbehälter 13 andererseits, wobei letztere genau gleich wie jene in Fig. 1 aufgebaut sind.

Das Kraftwerk 24 wird von einer FINEX®-Anlage mit Exportgas 12 versorgt, welches in einem Exportgasbehälter 13 zwischengespeichert werden kann. Nicht für das Kraftwerk 24 benötigtes Exportgas 22 kann wieder dem Hüttenwerksgasnetz, etwa einer Rohstofftrocknung, zugeführt werden.

Die FINEX®-Anlage weist in diesem Beispiel vier Reduktionsreaktoren 37-40 auf, welche als Wirbelschichtreaktoren ausgebildet sind und mit Feinerz beschickt werden. Feinerz und Additive 41 werden der Erztrocknung 42 zugeführt und von dort zuerst dem vierten Reaktor 37, sie gelangen dann in den dritten 38, den zweiten 39 und schließlich den ersten Reduktionsreaktor 40. Anstelle von vier Wirbelschichtreaktoren 37-40 können aber auch nur drei vorhanden sein.

Im Gegenstrom zum Feinerz wird das Reduktionsgas 43 geführt. Es wird am Boden des ersten Reduktionsreaktors 40 eingebracht und tritt an dessen Oberseite aus. Bevor es von unten in den zweiten Reduktionsreaktor 39 eintritt, kann es noch mit Sauerstoff O₂ erwärmt werden, ebenso zwischen zweitem 39 und drittem 38 Reduktionsreaktor.

Das Abgas 44 aus den Reduktionsreaktoren wird in einem Nasswäscher 47 gereinigt und als Exportgas 12 wie oben beschrieben im nachgeschalteten Kombikraftwerk 24 weiter verwendet.

Das Reduktionsgas 43 wird in einem Einschmelzvergaser 48 hergestellt, in den einerseits Kohle in Form von stückiger Kohle 49 und von Kohle in Pulverform 50 - diese gemeinsam mit Sauerstoff O₂ - zugeführt wird, in den andererseits das in den Reduktionsreaktoren 37-40 vorreduzierte und in der Eisenbrikettierung 51 in heißem Zustand zu Briketts (engl.: HCI für Hot Compacted Iron) geformte Eisenerz zugegeben wird. Die Eisenbriketts gelangen dabei über eine Förderanlage 52 in einen Speicherbehälter 53, der als Festbettreaktor ausgebildet ist, wo die Eisenbriketts mit grob gereinigtem Generatorgas 54 aus dem Einschmelzvergaser 48 gegebenenfalls vorgewärmt und reduziert werden. Hier können auch kalte Eisenbriketts 65 zugegeben werden. Anschließend werden die Eisenbriketts bzw. -oxide von oben in den Einschmelzvergaser 48 chargiert. Niedrig reduziertes Eisen (engl. LRI = low reduced iron) kann ebenfalls aus der Eisenbrikettierung 51 abgezogen werden.

Die Kohle im Einschmelzvergaser 48 wird vergast, es entsteht ein Gasgemisch, das hauptsächlich aus CO und H₂ besteht, und als Reduktionsgas (Generatorgas) 54 abgezogen und ein Teilstrom als Reduktionsgas 43 den Reduktionsreaktoren 37-40 zugeleitet wird. Das im Einschmelzvergaser 48 erschmolzene heiße Metall und die Schlacke werden abgezogen, siehe Pfeil 58.

Das aus dem Einschmelzvergaser 48 abgezogene Generatorgas 54 wird zuerst in einen Abscheider 59 geleitet, um mit ausgetragenem Staub abzuscheiden und den Staub über Staubbrenner in den Einschmelzvergaser 48 zurückzuführen. Ein Teil des vom Grobstaub gereinigten Generatorgases wird mittels Nasswäscher 60 weiter gereinigt und als Überschussgas 61 aus der FINEX®-Anlage entnommen, ein Teil kann auch der PSA-Anlage 14 zugeführt werden.

Ein weiterer Teil des gereinigten Generatorgases 54 wird ebenfalls in einem Nasswäscher 62 weiter gereinigt, zur Abkühlung einem Gaskompressor 63 zugeleitet und dann nach Mischung mit dem aus der PSA-Anlage 14 entnommenen, von CO₂ befreiten Produktgas 64 wieder dem Generatorgas 54 nach dem Einschmelzvergaser 48 zur Kühlung zugeführt. Durch diese Rückführung des von CO₂ befreiten Gases 64 können die darin enthaltenen reduzierenden Anteile noch für das FINEX®-Verfahren ausgenützt werden und andererseits kann die erforderliche Kühlung des heißen Generatorgases 54 von ca. 1050°C auf 700-870°C sichergestellt werden.

Das aus der Speicheranlage 53, wo die Eisenbriketts bzw. Eisenoxide mit entstaubtem und gekühltem Generatorgas 54 aus dem Einschmelzvergaser 48 erwärmt und reduziert werden, austretende Topgas 55 wird in einem Nasswäscher 66 gereinigt und dann ebenfalls zumindest teilweise der PSA-Anlage 14 zur Entfernung von CO₂ zugeführt, zumindest teilweise dem Abgas 44 aus den Reduktionsreaktoren 37-40 zugemischt werden. Die Gaszuleitung zur Speicheranlage 53 kann auch entfallen.

Der PSA-Anlage 14 kann auch ein Teil des Abgases 44 aus den Reduktionsreaktoren 37-40 direkt zugemischt werden. Die der PSA-Anlage 14 zuzuführenden Gase werden vorher in einem Kompressor 15 noch verdichtet.

Das Restgas 20 aus der PSA-Anlage 14 kann erfindungsgemäß wieder ganz oder zum Teil dem Exportgas 12 zugemischt bzw. über das nicht benötigte Exportgas 22 dem Hüttenwerksgasnetz zugegeben oder der Heißfackel 19 zur Verbrennung zugeführt werden, wie dies schon unter Fig. 1 beschrieben wurde. Ebenso decken sich Aufbau und Funktion der Anlage ab dem Exportgasbehälter 13 mit jenem aus Fig. 1.

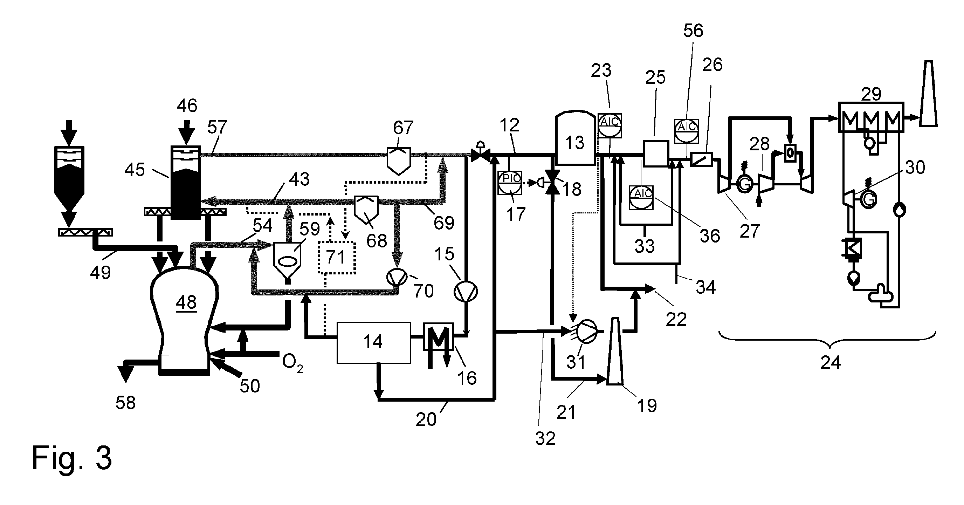

Fig. 3 zeigt die erfindungsgemäße Verbindung zwischen einer Anlage zur Schmelzreduktion einerseits und einem Exportgasbehälter 13 mit Kombikraftwerk 24 andererseits, wobei letztere genau gleich wie jene in Fig. 1 aufgebaut sind.

Das Kraftwerk 24 wird von einer COREX®-Anlage mit Exportgas 12 versorgt, welches in einem Exportgasbehälter 13 zwischengespeichert werden kann. Nicht für das Kraftwerk 24 benötigtes Exportgas 22 kann wieder dem Hüttenwerksgasnetz, etwa einer Rohstofftrocknung, zugeführt werden.

Die COREX®-Anlage weist in diesem Beispiel einen Reduktionsschacht 45 auf, welcher als Festbettreaktor ausgebildet ist und mit Stückerz, Pellets, Sinter und Additiven beschickt wird, siehe Bezugszeichen 46. Im Gegenstrom zum Stückerz etc. 46 wird das Reduktionsgas 43 geführt. Es wird am Boden des Reduktionsschachts 45 eingebracht und tritt an dessen Oberseite als Topgas 57 aus. Das Topgas 57 aus dem Reduktionsschacht 45 wird in einem Nasswäscher 67 weiter gereinigt und ein Teil als Exportgas 12 aus der COREX®-Anlage entnommen und ein Teil über die in der COREX®-Anlage befindliche PSA-Anlage 14 von CO₂ befreit und wieder dem Reduktionsschacht 45 zugeführt.

Das Reduktionsgas 43 für den Reduktionsschacht 45 wird in einem Einschmelzvergaser 48 hergestellt, in den einerseits Kohle in Form von stückiger Kohle 49 und von Kohle in Pulverform 50 - diese gemeinsam mit Sauerstoff O₂ - zugeführt wird, in den andererseits das im Reduktionsschacht 45 vorreduzierte Eisenerz zugegeben wird.

Die Kohle im Einschmelzvergaser 48 wird vergast, es entsteht ein Gasgemisch, das hauptsächlich aus CO und H₂ besteht, und als Topgas (Generatorgas) 54 abgezogen und ein Teilstrom als Reduktionsgas 43 dem Reduktionsschacht 45 zugeleitet wird. Das im Einschmelzvergaser 48 erschmolzene heiße Metall und die Schlacke werden abgezogen, siehe Pfeil 58.

Das aus dem Einschmelzvergaser 48 abgezogene Generatorgas 54 wird in einen Abscheider 59 geleitet, um mit ausgetragenem Staub abzuscheiden und den Staub über Staubbrenner in den Einschmelzvergaser 48 zurückzuführen.

Ein Teil des vom Grobstaub gereinigten Topgases 54 wird mittels Nasswäscher 68 weiter gereinigt und als Überschussgas 69 aus der COREX®-Anlage entnommen und dem Topgas 57 bzw. dem Exportgas 12 beigemischt.

Ein Teil des gereinigten Top- oder Generatorgases 54 nach Nasswäscher 68 wird zur Abkühlung einem Gaskompressor 70 zugeleitet und dann wieder dem Top- oder Generatorgas 54 nach dem Einschmelzvergaser 48 zur Kühlung zugeführt. Durch diese Rückführung können die darin enthaltenen reduzierenden Anteile noch für das COREX®-Verfahren ausgenützt werden und andererseits kann die erforderliche Kühlung des heißen Top- oder Generatorgases 54 von ca. 1050°C auf 700-900°C sichergestellt werden.

Ein Teil des Topgases 57, das auch Überschussgas 69 enthalten kann, wird mittels Kompressor 15 verdichtet und im Nachkühler 16 gekühlt, bevor es der PSA-Anlage 14 zugeleitet wird. Das von CO₂ befreite Produktgas aus der PSA-Anlage 14 wird zumindest teilweise dem gekühlten Gas nach dem Nasswäscher 68 zugeführt und damit wieder dem Generatorgas 54.

Das von CO₂ befreite Produktgas aus der PSA-Anlage 14 kann gegebenenfalls auch teilweise in einem Heizaggregat 71 erwärmt und dem Reduktionsgas 43 zugemischt werden, und zwar nach dem Zumischen von Generatorgas 54. Es kann aber auch ein Teil des Topgases 57 im Heizaggregat 71 erwärmt und dann dem Reduktionsgas 43 zugemischt werden.

Das Restgas 20 wird hier wieder erfindungsgemäß zumindest teilweise dem Exportgas 12 vor dem Exportgasbehälter 13 zugeleitet und mit diesem vermischt. Es könnte auch - ganz oder zum Teil - entweder nach einer H₂S-Reinigung wieder in die Atmosphäre entlassen werden und/oder einem weiteren Verdichter zur Verflüssigung von CO₂ zugeführt werden, um es dann fortzuleiten und etwa unterirdisch zu lagern oder um es als Ersatz für Stickstoff bei der Eisenherstellung zu verwenden.

Der Druck des Exportgases 12 nach der Zuleitung für Restgas 20 wird mit einem Druckmesser 17 gemessen und in Abhängigkeit vom gemessenen Druck oder dem Niveau des Exportgasspeichers ein Ventil 18 in der Leitung 21 für Exportgas zur Heißfackel 19 betätigt: übersteigt der Druck des Exportgases 12 einen vordefinierten Druck oder ein vordefiniertes Niveau im Exportgasspeicher, dann wird zumindest ein Teil davon zur Heißfackel 19 geleitet und dort verbrannt, der Rest geht weiter in den Exportgasbehälter 13.

Das Exportgas aus dem Exportgasbehälter 13 wird einem Kombikraftwerk 24 als Brennstoff zugeleitet, und zwar optional über einen Pufferbehälter 25 und optional einen Filter 26. Das Exportgas wird einem Brenngaskompressor 27 und dann der Gasturbine 28 zugeführt. Die Abwärme aus der Gasturbine wird im Abhitzekessel 29 für einen Dampfkreislauf mit einer Dampfturbine 30 genützt.

Die Anlage und die Funktion der Anlage gemäß Fig. 3 nach dem Abzug des Exportgases aus der COREX®-Anlage sind gleich mit jener aus Fig. 1.

In Fig. 3 ist zusätzlich noch ein Regelventil 72 für Exportgas 12 vorgesehen, mit welchem die Menge an Exportgas 12 geregelt werden kann, die aus der COREX®-Anlage entnommen wird.

Wird die Erfindung auf das Synthesegas einer _Anlage zur Synthesegasherstellung angewendet, so tritt diese in den obigen Ausführungsbeispielen an die Stelle der Anlage zur Roheisenherstellung. Zumindest ein Teil des Synthesegases bildet dann das Exportgas, für das kein Exportgasbehälter 13 vorgesehen ist, und dessen Heizwert durch Zumischen von Restgas aus einer in der Anlage zur Synthesegasherstellung befindlichen CO₂-Abscheideanlagen geregelt wird. Die entsprechende Anlage mit Zuleitungen 33, 34 für Brenngas und nicht brennbares Gas und mit Kraftwerk 24, gleicht dann für das Synthesegas jener von den Fig. 1-3 Das CO₂-reiche Restgas aus der CO₂-Abscheideanlage muss für das Zumischen zum Exportgas mittels Kompressor auf den Exportgasdruck (=Synthesegasdruck) verdichtet werden.

### Bezugszeichenliste:

- 1: Hochofen
- 2: Sinteranlage
- 3: Sauerstoffhältiges Gas
- 4: Ringleitung
- 5: Heißwind
- 6: Reduktionsgasofen
- 7: Schlacke
- 8: Roheisen
- 9: Top- oder Gichtgas
- 10: Staubabscheider oder Zyklon
- 11: Nasswäscher
- 12: Exportgas
- 13: Exportgasbehälter
- 14: PSA-Anlage
- 15: Kompressor
- 16: Nachkühler
- 17: Druckmesser
- 18: Ventil
- 19: Heißfackel
- 20: Restgas
- 21: Leitung für Exportgas zur Heißfackel 19
- 22: nicht benötigtes Exportgas
- 23: erstes Messgerät zur Heizwertmessung
- 24: Kombikraftwerk
- 25: Pufferbehälter
- 26: Filter
- 27: Brenngaskompressor
- 28: Gasturbine
- 29: Abhitzekessel
- 30: Dampfturbine
- 31: Gebläse
- 32: Leitung für Restgas zum Hüttenwerkgasnetz bzw. zur Heißfackel 19
- 33: Zuleitung für Brenngas
- 34: Zuleitung für nicht brennbares Gas
- 35: Expansionsturbine
- 36: zweites Messgerät 36 zur Heizwertmessung
- 37: Vierter Reduktionsreaktor
- 38: Dritter Reduktionsreaktor
- 39: Zweiter Reduktionsreaktor
- 40: Erster Reduktionsreaktor
- 41: Feinerz und Additive
- 42: Erztrocknung
- 43: Reduktionsgas
- 44: Abgas aus Reduktionsreaktoren 37-40
- 45: Reduktionsschacht
- 46: Stückerz, Pellets, Sinter und Additive
- 47: Nasswäscher für Abgas 44
- 48: Einschmelzvergaser
- 49: stückige Kohle
- 50: Kohle in Pulverform
- 51: Eisenbrikettierung
- 52: Förderanlage
- 53: als Festbettreaktor ausgebildeter Speicherbehälter zur Vorwärmung und Reduktion von Eisenoxiden und/oder Eisenbriketts
- 54: Generatorgas aus Einschmelzvergaser 48
- 55: Topgas aus Nasswäscher 66
- 56: drittes Messgerät zur Heizwertmessung
- 57: Topgas aus Reduktionsschacht 45
- 58: heißes Metall und Schlacke
- 59: Abscheider für Feinerz
- 60: Nasswäscher
- 61: Überschussgas
- 62: Nasswäscher
- 63: Gaskompressor
- 64: von CO₂ befreites Gas (Produktgas) aus PSA-Anlage 14
- 65: kalte Eisenbriketts
- 66: Nasswäscher
- 67: Nasswäscher nach Reduktionsschacht 45
- 68: Nasswäscher nach Abscheider für Feinerz 59
- 69: Überschussgas aus COREX®-Anlage
- 70: Gaskompressor nach Nasswäscher 68
- 71: Heizaggregat
- 72: Regelventil für Exportgas 12

## Patentansprüche

1. Verfahren zur Heizwertregelung für Abgase aus Anlagen zur Roheisenherstellung mit integrierten CO₂-Abscheideanlagen oder für Synthesegas aus Anlagen zur Synthesegasherstellung mit integrierten CO₂-Abscheideanlagen, wobei zumindest ein Teil des Abgases bzw. Synthesegases als Exportgas (12) aus der Anlage zur Roheisenherstellung bzw. zur Synthesegasherstellung abgeführt, gegebenenfalls in einem Exportgasbehälter (13) gesammelt, und nachfolgend in einer Gasturbine (28) thermisch verwertet wird, wobei das Abgas aus der Gasturbine einem Abwärmedampferzeuger (29) zur Erzeugung von Dampf zugeführt wird, **dadurch gekennzeichnet, dass** dem Exportgas (12) vor der Gasturbine (28), insbesondere gegebenenfalls vor dem der Gasturbine (28) vorgeschalteten Exportgasbehälter (13), in Abhängigkeit vom Heizwert des Exportgases nach der Restgaszugabe, insbesondere nach dem Exportgasbehälter, zumindest ein Teil des Restgases (20) aus der CO₂-Abscheideanlage (14) zugemischt wird, wobei der Restgasanteil erhöht wird, wenn der Heizwert des Exportgases (12) über einen vordefinierten maximalen Heizwert steigt, und der Restgasanteil verringert wird, wenn der Heizwert des Exportgases (12) unter einen vordefinierten minimalen Heizwert sinkt.

2. Verfahren nach Anspruch 1, **dadurch gekennzeichnet, dass** das mit Restgas (20) gemischte Exportgas (12) vor der Gasturbine (28) einen Pufferbehälter (25) durchläuft.

3. Verfahren nach Anspruch 1 oder 2, **dadurch gekennzeichnet, dass** bei Unterschreiten des vordefinierten minimalen Heizwerts vor der Gasturbine (28) zusätzlich, zum Beispiel vor und/oder nach dem Pufferbehälter (25), Brenngas (33) zugegeben wird.

4. Verfahren einem der Ansprüche 1 bis 3, **dadurch gekennzeichnet, dass** bei Überschreiten des vordefinierten maximalen Heizwerts vor der Gasturbine (28) zusätzlich, zum Beispiel vor und/oder nach dem Pufferbehälter (25), nicht brennbares Gas (34) zugegeben wird.

5. Verfahren einem der Ansprüche 1 bis 4, **dadurch gekennzeichnet, dass** im Falle der Roheisenherstellung jener Teil des Restgases (20), der nicht dem Exportgas (12) zugemischt wird, dem Hüttenwerksgasnetz, bevorzugter Weise dem Gichtgasnetz, oder einer Heißfackel (19) zugeführt wird.

6. Verfahren nach einem der Ansprüche 1 bis 5, **dadurch gekennzeichnet, dass** das Exportgas (12) zumindest eines der folgenden Abgase enthält:
- Topgas (9) aus einem Hochofen, insbesondere aus einem Sauerstoffhochofen (1) mit Topgasrückführung,
- Abgas (61) aus einem Einschmelzvergaser (48) einer Schmelzreduktionsanlage,
- Abgas (44, 57) aus zumindest einem Reduktionsreaktor (37-40) oder Reduktionsschacht (45) einer Schmelzreduktionsanlage,
- Abgas (55) aus zumindest einem Festbettreaktor (53) zur Vorwärmung und/oder Reduktion von Eisenoxiden und/oder Eisenbriketts einer Schmelzreduktionsanlage,
- Synthesegas aus einer Anlage zur Synthesegasherstellung.

7. Anlage zur Durchführung des Verfahrens nach einem der Ansprüche 1 bis 6, umfassend zumindest
- eine Anlage zur Roheisenherstellung mit integrierter CO₂-Abscheideanlage (14) oder eine Anlage zur Synthesegasherstellung mit integrierter CO₂-Abscheideanlage,
- eine Exportgasleitung, mit welcher ein Teil des Abgases bzw. Synthesegases als Exportgas (12) aus der Anlage zur Roheisenherstellung bzw. zur Synthesegasherstellung abgeführt werden kann,
- gegebenenfalls einem Exportgasbehälter (13), in welchem das Exportgas (12) gesammelt werden kann, sowie
- eine Gasturbine (28), in welcher das Exportgas (12) thermisch verwertet werden kann,
- einem Abwärmedampferzeuger (29), in welchem das Abgas aus der Gasturbine (28) zur Erzeugung von Dampf verwendet werden kann,
**dadurch gekennzeichnet, dass** die CO₂-Abscheideanlage (14) so mit der Exportgasleitung verbunden ist, dass dem Exportgas (12) vor der Gasturbine (28), insbesondere gegebenenfalls vor dem der Gasturbine (28) vorgeschalteten Exportgasbehälter (13), zumindest ein Teil des Restgases (20) aus der CO₂-Abscheideanlage (14) zugemischt werden kann, und dass nach der Restgaszugabe, insbesondere nach dem Exportgasbehälter (13), ein Messgerät (23) zur Heizwertmessung des Exportgases vorgesehen ist.

8. Anlage nach Anspruch 7, **dadurch gekennzeichnet, dass** gegebenenfalls nach dem Exportgasbehälter (13) und vor der Gasturbine (28) ein Pufferbehälter (25) vorgesehen ist.

9. Anlage nach Anspruch 7 oder 8, **dadurch gekennzeichnet, dass** vor und/oder nach dem Pufferbehälter (25) zumindest eine Zuleitung (33) für Brenngas vorgesehen ist.

10. Anlage nach einem der Ansprüche 7 bis 9, **dadurch gekennzeichnet, dass** vor und/oder nach dem Pufferbehälter (25) zumindest eine Zuleitung (34) für nicht brennbares Gas vorgesehen ist.

11. Anlage nach einem der Ansprüche 7 bis 10, **dadurch gekennzeichnet, dass** im Falle der Roheisenherstellung eine Leitung (32) für jenen Teil des Restgases, der nicht dem Exportgas (12) zugemischt wird, vorgesehen ist, welche in das Hüttenwerksgasnetz, bevorzugter Weise in das Gichtgasnetz, oder in eine Heißfackel (19) mündet.

12. Anlage nach einem der Ansprüche 7 bis 11, **dadurch gekennzeichnet, dass** zumindest eine Leitung vorgesehen ist, mit welcher
- Topgas (9) aus einem Hochofen, insbesondere aus einem Sauerstoffhochofen (1) mit Topgasrückführung,
- Abgas (61) aus einem Einschmelzvergaser (48) einer Schmelzreduktionsanlage,
- Abgas (44, 57) aus zumindest einem Reduktionsreaktor (37-40) oder Reduktionsschacht (45) einer Schmelzreduktionsanlage,
- Abgas (55) aus zumindest einem Festbettreaktor (53) zur Vorwärmung und/oder Reduktion von Eisenoxiden und/oder Eisenbriketts einer Schmelzreduktionsanlage,
- Synthesegas aus einer Anlage zur Synthesegasherstellung in die Exportgasleitung geleitet werden kann.

## Claims

1. Method for regulating the joule value of offgases from plants for pig iron production, having integrated CO₂ removal plants, or for synthesis gases from plants for synthesis gas production, having integrated CO₂ removal plants, wherein at least one part of the offgas or synthesis gas is discharged from the plant for pig iron production or for synthesis gas production as export gas (12), if necessary collected in an export gas container (13), and is subsequently thermally utilised in a gas turbine (28), wherein the offgas from the gas turbine is supplied to a waste heat boiler (29) for generating steam, **characterised in that** at least one part of the tail gas (20) from the CO₂ removal plant (14) is added to the export gas (12) before the gas turbine (28), in particular if necessary before the export gas container (13) upstream of the gas turbine (28), depending on the joule value of the export gas after the addition of the tail gas, in particular after the export gas container, wherein the proportion of tail gas is increased if the joule value of the export gas (12) rises above a predefined maximum joule value, and the proportion of tail gas is reduced if the joule value of the export gas (12) drops below a predefined minimum joule value.

2. Method according to claim 1, **characterised in that** the export gas (12) mixed with tail gas (20) flows through a buffer container (25) before the gas turbine (28).

3. Method according to claim 1 or 2, **characterised in that** when the predefined minimum joule value before the gas turbine (28) is not reached, for example before and/or after the buffer container (25), gaseous fuel (33) is additionally added.

4. Method according to one of claims 1 to 3, **characterised in that** when the predefined maximum joule value before the gas turbine (28) is exceeded, for example before and/or after the buffer container (25), non-combustible gas (34) is additionally added.

5. Method according to one of claims 1 to 4, **characterised in that** in the case of pig iron production, the part of the tail gas (20) which is not added to the export gas (12) is supplied to the smelter gas distribution network, preferably to the furnace gas distribution network, or to a hot flare (19).

6. Method according to one of claims 1 to 5, **characterised in that** the export gas (12) contains at least one of the following offgases:
- top gas (9) from a blast furnace, in particular from an oxygen blast furnace (1) having top gas recirculation,
- offgas (61) from a smelter gasifier (48) of a smelting reduction plant,
- offgas (44, 57) from at least one reduction reactor (37-40) or reduction shaft (45) of a smelting reduction plant,
- offgas (55) from at least one fixed bed reactor (53) to pre-heat and/or reduce iron oxides and/or compacted iron of a smelting reduction plant,
- synthesis gas from a plant for synthesis gas production.

7. Plant for carrying out the method as claimed in one of claims 1 to 6, comprising at least
- one pig iron production plant with an integrated CO₂ removal plant (14) or a plant for synthesis gas production with an integrated CO₂ removal plant,
- one export gas line, with which a part of the offgas or synthesis gas can be discharged as export gas (12) from the plant for pig iron production or for synthesis gas production,
- if necessary, an export gas container (13), in which the export gas (12) can be collected, as well as
- a gas turbine (28), in which the export gas (12) can be thermally utilised,
- a waste heat boiler (29), in which the offgas from the gas turbine (28) can be utilised for the generation of steam,
**characterised in that** the CO₂ removal plant (14) is connected to the export gas line such that at least one part of the tail gas (20) from the CO₂ removal plant (14) can be added to the export gas (12) before the gas turbine (28), in particular if necessary before the export gas container (13) upstream of the gas turbine (28), and such that a measuring instrument (23) for measuring the joule value of the export gas is provided after the addition of tail gas, in particular after the export gas container (13).

8. Plant according to claim 7, **characterised in that** if necessary a buffer container (25) is provided after the export gas container (13) and before the gas turbine (28).

9. Plant according to claim 7 or 8, **characterised in that** at least one supply line (33) for gaseous fuel is provided before and/or after the buffer container (25).

10. Plant according to one of claims 7 to 9, **characterised in that** at least one supply line (34) for non-combustible gas is provided before and/or after the buffer container (25).

11. Plant according to one of claims 7 to 10, **characterised in that,** in the case of pig iron production, a line (32) for the part of the tail gas which is not added to the export gas (12) is provided, which flows into the smelter gas distribution network, preferably into the furnace gas distribution network, or into a hot flare (19).

12. Plant according to one of claims 7 to 11, **characterised in that** at least one line is provided, with which
- top gas (9) from a blast furnace, in particular an oxygen blast furnace (1), having a top gas recirculation,
- offgas (61) from a smelting gasifier (48) of a smelting reduction plant,
- offgas (44, 57) from at least one reduction reactor (37-40) or reduction shaft (45) of a smelting reduction plant,
- offgas (55) from at least one fixed bed reactor (53) for pre-heating and/or reducing iron oxides and/or compacted iron of a smelting reduction plant,
- synthesis gas from a plant for synthesis gas production can be led into the export gas line.

## Revendications

1. Procédé de régulation de la puissance calorifique pour les gaz d'échappement issus d'installations de production de fonte brute avec installations de séparation du CO₂ intégrées ou pour le gaz de synthèse issu d'installations de production de gaz de synthèse avec installations de séparation du CO₂ intégrées, dans lequel au moins une partie des gaz d'échappement resp. du gaz de synthèse (12) est évacuée sous la forme de gaz d'exportation (12) de l'installation de production de fonte brute resp. de production de gaz de synthèse, le cas échéant collectée dans un réservoir à gaz d'exportation (13) et ensuite valorisée thermiquement dans une turbine à gaz (28), dans lequel les gaz d'échappement issus de la turbine à gaz alimentent un générateur de vapeur à chaleur résiduelle (29) afin de produire de la vapeur, **caractérisé en ce qu**'au moins une partie du gaz résiduel (20) issu de l'installation de séparation du CO₂ (14) est mélangé au gaz d'exportation (12) avant la turbine à gaz (28), en particulier le cas échéant avant le réservoir à gaz d'exportation (13) monté en amont de la turbine à gaz (28), en fonction de la puissance calorifique du gaz d'exportation après adjonction du gaz résiduel, en particulier après le réservoir à gaz d'exportation, dans lequel la partie du gaz résiduel est augmentée lorsque la puissance calorifique du gaz d'exportation (12) monte au-delà d'une puissance calorifique maximale prédéfinie et dans lequel la partie du gaz résiduel est réduite lorsque la puissance calorifique du gaz d'exportation (12) descend en-deçà d'une puissance calorifique minimale prédéfinie.

2. Procédé selon la revendication 1, **caractérisé en ce que** le gaz d'exportation (12) mélangé au gaz résiduel (20) traverse un réservoir tampon (25) avant la turbine à gaz (28).

3. Procédé selon la revendication 1 ou 2, **caractérisé en ce que** du gaz combustible (33) est adjoint en sus, par exemple avant et/ou après le réservoir tampon (25) lorsque la puissance calorifique minimale prédéfinie n'est pas atteinte avant la turbine à gaz (28).

4. Procédé selon l'une des revendications 1 à 3, **caractérisé en ce que** du gaz incombustible (34) est adjoint en sus, par exemple avant et/ou après le réservoir tampon (25) lorsque la puissance calorifique maximale prédéfinie est excédée avant la turbine à gaz (28).

5. Procédé selon l'une des revendications 1 à 4, **caractérisé en ce que** dans le cas de la production de fonte brute, la partie du gaz résiduel (20) qui n'est pas mélangée au gaz d'exportation (12) alimente le réseau gazier du haut-fourneau, de préférence le réseau à gaz de gueulard, ou une torche de brûlage (19).

6. Procédé selon l'une des revendications 1 à 5, **caractérisé en ce que** le gaz d'exportation (12) contient au moins l'un des gaz d'échappement suivants :
- gaz supérieur (9) issu d'un haut-fourneau, en particulier d'un haut-fourneau à oxygène (1) avec récupération du gaz supérieur,
- gaz d'échappement (61) issus d'un gazéificateur à fusion (48) d'une installation de réduction par fusion,
- gaz d'échappement (44, 57) issus d'au moins un réacteur de réduction (37 - 40) ou d'un puits de réduction (45) d'une installation de réduction par fusion,
- gaz d'échappement (55) issus d'au moins un réacteur à lit fixe (53) pour le préchauffage et/ou la réduction d'oxydes de fer et/ou de briquettes de fer d'une installation de réduction par fusion,
- gaz de synthèse issu d'une installation pour la production de gaz de synthèse.

7. Installation pour l'exécution du procédé selon l'une des revendications 1 à 6, comprenant au moins
- une installation pour la production de fonte brute avec installation de séparation du CO₂ (14) intégrée ou une installation pour la production de gaz de synthèse avec installation de séparation du CO₂ intégrée
- une conduite pour le gaz d'exportation permettant d'évacuer une partie des gaz d'échappement resp. du gaz de synthèse sous forme de gaz d'exportation (12) de l'installation pour la production de fonte brute resp. la production de gaz de synthèse,
- le cas échéant un réservoir à gaz d'exportation (13), permettant de collecter le gaz d'exportation (12), ainsi que
- une turbine à gaz (28), dans laquelle le gaz d'exportation (12) peut être valorisé thermiquement,
- un générateur de vapeur à chaleur résiduelle (29), dans lequel les gaz d'échappement issus de la turbine à gaz (28) peuvent être valorisés afin de produire de la vapeur,
**caractérisé en ce que** l'installation de séparation du CO₂ (14) est reliée de telle manière à la conduite pour le gaz d'exportation qu'au moins une partie du gaz résiduel (20) issu de l'installation de séparation du CO₂ (14) peut être mélangée au gaz d'exportation (12) avant la turbine à gaz (28), en particulier le cas échéant avant le réservoir à gaz d'exportation (13) monté en amont de la turbine à gaz (28) et **en ce qu'**un appareil de mesure (23) servant à mesurer la puissance calorifique du gaz d'exportation est prévu après l'adjonction de gaz résiduel, en particulier après le réservoir à gaz d'exportation (13).

8. Installation selon la revendication 7, **caractérisée en ce qu'un** réservoir tampon (25) est le cas échéant prévu après le réservoir à gaz d'exportation (13) et avant la turbine à gaz (28).

9. Installation selon la revendication 7 ou 8, **caractérisée en ce qu**'au moins une conduite d'amenée (33) pour le gaz combustible est prévue avant et/ou après le réservoir tampon (25).

10. Installation selon l'une des revendications 7 à 9, **caractérisée en ce qu**'au moins une conduite d'amenée (34) pour le gaz incombustible est prévue avant et/ou après le réservoir tampon (25).

11. Installation selon l'une des revendications 7 à 10, **caractérisée en ce que** dans le cas de la production de fonte brute une conduite (32) est prévue pour la partie du gaz résiduel qui n'est pas mélangée au gaz d'exportation (12), laquelle débouche dans le réseau à gaz du haut-fourneau, de préférence dans le réseau à gaz de gueulard ou dans une torche de brûlage (19).

12. Installation selon l'une des revendications 7 à 11, **caractérisée en ce qu**'au moins une conduite est prévue, laquelle permet de diriger
- le gaz supérieur (9) issu d'un haut-fourneau, en particulier d'un haut-fourneau à oxygène (1) avec récupération du gaz supérieur,
- les gaz d'échappement (61) issus d'un gazéificateur à fusion (48) d'une installation de réduction par fusion,
- les gaz d'échappement (44, 57) issus d'au moins un réacteur de réduction (37 - 40) ou d'un puits de réduction (45) d'une installation de réduction par fusion,
- les gaz d'échappement (55) issus d'au moins un réacteur à lit fixe (53) pour le préchauffage et/ou la réduction d'oxydes de fer et/ou de briquettes de fer d'une installation de réduction par fusion,
- le gaz de synthèse issu d'une installation pour la production de gaz de synthèse dans la conduite pour le gaz d'exportation.
